Europäisches Patentamt

European Patent Office

Office européen des brevets

(19)

(11) Numéro de publication : **0 363 267 B1**

# (12) FASCICULE DE BREVET EUROPEEN

(45) Date de publication du fascicule du brevet :
**02.12.92 Bulletin 92/49**

(51) Int. Cl.⁵ : $G21C\ 7/08$

(21) Numéro de dépôt : **89402708.5**

(22) Date de dépôt : **02.10.89**

(54) **Dispositif de centrage et de fixation d'une bride de guide de grappe sur une plaque de coeur d'un réacteur nucléaire.**

(30) Priorité : **04.10.88 FR 8812975**

(43) Date de publication de la demande :
**11.04.90 Bulletin 90/15**

(45) Mention de la délivrance du brevet :
**02.12.92 Bulletin 92/49**

(84) Etats contractants désignés :
**BE CH DE ES GB LI SE**

(56) Documents cités :
**EP-A- 0 195 686**
**EP-A- 0 229 029**
**FR-A- 2 168 564**
**FR-A- 2 326 763**

(73) Titulaire : **FRAMATOME**
**Tour Fiat Cédex 16**
**F-92084 Paris-la-Défense (FR)**

(72) Inventeur : **Chevereau, Gérard**
**84 Avenue Thiers**
**F-93340 Le Raincy (FR)**

(74) Mandataire : **Armengaud Ainé, Alain et al**
**Cabinet ARMENGAUD AINE 3 Avenue**
**Bugeaud**
**F-75116 Paris (FR)**

EP 0 363 267 B1

## Description

La présente invention est relative à un dispositif de liaison assurant le centrage et la fixation sur la plaque supérieure de coeur fermant la cavité du coeur d'un réacteur nucléaire, en particulier du genre à eau pressurisée et une bride s'étendant au-dessus de cette plaque et sur laquelle sont immobilisées les extrémités de tubes-guides dans lesquels se déplacent des assemblages en grappe de crayons de matériau absorbant les neutrons, propres à s'engager à l'intérieur du coeur entre les éléments de combustibles nucléaires, pour assurer la régulation de la réaction de fission entretenue par ceux-ci.

L'invention concerne ainsi plus particulièrement un dispositif permettant de positionner l'une par rapport à l'autre deux plaques parallèles horizontales, en assurant notamment la parfaite coïncidence de passages qui les traversent mutuellement pour l'engagement ou le retrait dans le coeur des grappes de crayons absorbants, en éliminant tous risques de coïncement ou de blocage de ces grappes au cours de leurs mouvements, tout en permettant un léger déplacement axial relatif.

Dans les solutions actuelles mises en oeuvre dans la pratique notamment comme décrit dans le EP-A-0 229 029, la liaison et le positionnement précis de ces deux pièces sont réalisés au moyen de broches, dont l'une des extrémités pénètre dans un logement approprié de la plaque de coeur en étant fendue axialement pour lui conférer une relative élasticité dans le sens transversal, l'autre extrémité traversant, avec jeu, un alésage de la bride d'un guide de grappe et étant immobilisée par rapport à celle-ci par le vissage d'un écrou en butée sur un épaulement interne de l'alésage afin d'exercer une réaction lors du vissage sur une partie filetée de la broche. L'écrou est ensuite bloqué sur la bride par soudage ou autre moyen de fixation approprié. En répartissant dès lors sur la périphérie de la bride un nombre convenable de telles broches et en réalisant leur serrage coordonné par les écrous qui leur sont associés, on réalise un positionnement précis de la bride par rapport à la plaque, notamment afin de faire coïncider avec l'axe vertical de ces deux pièces et d'ajuster à une valeur exactement déterminée le jeu horizontal prévu entre elles.

L'extrémité fendue axialement est formée de deux branches flexibles dont le diamètre enveloppe est légèrement supérieur à l'alésage récepteur, ménagé dans la plaque supérieure du coeur, ce qui permet d'une part d'assurer qu'après montage il ne subsiste aucun jeu susceptible d'être le siège de vibrations et d'usure, d'autre part de s'adapter aux tolérances de position des axes des deux broches respectivement sur la plaque supérieure de coeur et sur la bride inférieure du guide de grappe.

Les deux broches sont généralement disposées de façon à ce que les fentes se trouvent positionnées, l'une par rapport à l'autre, perpendiculairement.

Cet état assure le meilleur compromis, résistance et souplesse. Cependant, le centrage des deux pièces parallèles est réalisé à l'encontre de la section résistance des broches. Or, celles-ci doivent non seulement assurer l'orientation et la coïncidence des guides de grappes vis-à-vis du réseau des éléments combustibles sous la plaque de coeur, mais également le maintien de l'extrémité basse de ces guides, en s'opposant aux vibrations parfois notables créées par les sollicitations hydromécaniques résultant de l'écoulement axial de l'eau de refroidissement qui traverse la plaque et la bride et est recueillie au-dessus de cette plaque dans la partie supérieure de la cuve du réacteur puis évacuée grâce à des ajutages de sortie appropriés. Les solutions classiques ne répondent qu'imparfaitement à ces exigences et notamment ne peuvent pas fournir une rigoureuse assurance de la tenue dans la temps.

La présente invention a pour objet un dispositif qui pallie les inconvénients des solutions classiques, en permettant de dissocier les deux fonctions respectivement de centrage de la plaque et de la bride par rapport à une référence axiale commune, et de fixation de ces deux pièces l'une par rapport à l'autre, en réalisant entre elles un écartement qui se maintient toujours égal à lui-même, quels que soient les régimes de fonctionnement du réacteur et les contraintes auxquelles ils soumettent les guides de grappes et leurs liaisons avec la plaque notamment.

A cet effet le dispositif considéré, pour le centrage et la fixation d'une bride de guide de grappe et d'une plaque de coeur d'un réacteur nucléaire, s'étendant parallèlement l'une à l'autre dans des plans horizontaux avec un écartement déterminé, se caractérise en ce qu'il comporte au moins deux broches de guidage axial de la bride par rapport à la plaque de coeur, diamétralement opposées et solidaires de la plaque ou de la bride pour s'engager dans un logement en regard prévu dans la bride ou dans la plaque respectivement, et un ensemble de patins autobloquants, adaptés à coulisser avec jeu dans des alésages prévus dans la bride pour s'appliquer contre la surface de la plaque, ces patins étant associés chacun à un mécanisme de commande en position, portée par la bride et exerçant sur les patins un effort ayant une composante transversale afin de réaliser par réaction l'immobilisation de la bride vis-à-vis de la plaque.

Grâce à ces dispositions, les broches assurent d'une part un guidage en translation axiale de la bride par rapport à la plaque supérieure de coeur, aux jeux de montage près de ces broches dans leurs logements. Simultanément, les patins autobloquants réalisent le maintien latéral et axial de la bride vis-à-vis de la plaque, le mécanisme de blocage associé à chacun de ces patins permettant d'ajuster leur positionnement relatif dans leurs alésages de la bride et par suite de régler le positionnement de celle-ci, ceci indépendamment des variations dimensionnelles qu'ils peuvent subir au cours du fonctionnement du réacteur, leur structure étant en outre déterminée de façon à absorber aisément les effets des vibrations créées par l'écoulement de l'eau de refroidissement du coeur à travers la plaque et la bride.

Selon une caractéristique particulière du dispositif considéré, les patins autobloquants présentent une forme générale cylindrique et comportent une face d'appui plane, appliquée contre la plaque de coeur et une face opposée inclinée sur l'horizontale. Le mécanisme de commande coopérant avec chaque patin est de préférence constitué au moyen d'un poussoir engagé dans l'alésage de la bride et comportant une face bombée, en appui sur la face inclinée du patin, ce poussoir étant prolongé à l'extérieur de l'alésage de la bride à l'opposé de la plaque par une tige allongée, disposée selon l'axe d'un manchon fileté intérieurement à son extrémité pour le vissage d'une douille de tarage creuse, traversée librement par la tige et exerçant un effort vertical sur celle-ci par l'intermédiaire d'une cartouche à ressort, en appui d'une part contre la douille et d'autre part sur une rondelle traversée par la tige et en butée sur un épaulement de celle-ci.

Avantageusement, la cartouche à ressort comporte un empilement de rondelles coniques montées entre la rondelle en appui sur l'épaulement de la tige et une rondelle complémentaire, coulissant librement dans le manchon, parallèlement, à l'axe de la tige, sous l'effet du vissage de la douille sur le filetage interne du manchon. La cartouche à ressort exerce ainsi de façon permanente sur le patin un effort réglable et convenablement ajusté et développe une force de frottement entre la plaque et le patin s'opposant à un déplacement latéral de la bride par rapport à la plaque dans une direction préférentielle. La composition de plusieurs patins sur la même bride concourt à s'opposer à tout déplacement latéral, quelle que soit sa direction, tout en permettant en cas de vibrations accidentelles d'encaisser les effets de ces dernières, la bride reprenant ultérieurement vis-à-vis de la plaque sa position déterminée, une fois ces vibrations disparues ou éliminées.

Selon une autre caractéristique du dispositif considéré, le manchon fileté comporte, à son extrémité inférieure, un embout creux, traversé par la tige et dont l'extrémité s'engage en partie dans l'alésage de la bride puis est immobilisé en position par rapport à la bride par soudure ou autre moyen de fixation analogue.

Selon encore une autre caractéristique, la tige allongée présente à son extrémité supérieure dépassant de la douille de tarage, une fente transversale de repérage de son orientation axiale et par suite de celle de la face bombée du poussoir vis-à-vis de l'axe de la bride, en permettant, par réaction sur la face inclinée du patin, un ajustement relatif du poussoir et par suite de la bride qui lui est liée, vis-à-vis de la plaque de coeur.

Avantageusement, chaque patin est configuré en forme de chape, dont les deux côtés parallèles sont disposés de part et d'autre d'une nervure plane centrale, prolongeant le poussoir vers le bas, la chape et la nervure étant réunies par une goupille transversale portée par les côtés de la chape et engagée avec jeu dans un trou de la nervure, afin de permettre un débattement axial et radial du poussoir par rapport au patin lors d'un appui de la bride sur la plaque. Le montage du patin et du poussoir ainsi réalisé permet de rendre ces deux éléments imperdables, en les réunissant l'un à l'autre par une liaison à jeu, ne gênant pas, lors de l'appui de la face bombée du poussoir sur la face inclinée du patin, le déplacement relatif de ces pièces pour le centrage et l'immobilisation de la bride.

La patin peut utilement comporter un revêtement de surface tel que la face de ce patin en contact avec la plaque de coeur présente un coefficient de frottement élevé. Au contraire, le poussoir, la surface interne de l'alésage de la bride recevant le patin, ainsi que les faces inclinée et bombée respectivement du patin et du poussoir comportent de préférence un revêtement de surface présentant un coefficient de frottement réduit, facilitant le déplacement relatif de ces pièces. Avantageusement, ce revêtement peut être constitué par du chrome et de la "Stellite", ou tout autre matériau analogue, usuel dans la technique et adapté aux conditions de fonctionnement dans la cuve du réacteur.

D'autres caractéristiques d'un dispositif de centrage et de fixation d'une bride de guide de grappe par rapport à une plaque de coeur de réacteur nucléaire, apparaîtront encore à travers la description qui suit d'un exemple de réalisation ainsi que diverses variantes de celui-ci, donnés à titre indicatif et non limitatif, en référence aux dessins annexés sur lesquels :

- La Figure 1 est une vue schématique en coupe transversale partielle de la partie supérieure de la cuve d'un réacteur nucléaire à eau pressurisée, montrant, en particulier, le positionnement relatif des brides de guides de grappe vis-à-vis de la plaque supérieure du coeur.

- La Figure 2 est une vue de dessus à plus grande échelle d'une bride de guide de grappe.

- La Figure 3 est une vue à encore plus grande échelle, en coupe axiale d'un patin autobloquant et du mécanisme de commande de celui-ci.

- La Figure 4 est une vue en coupe transversale partielle selon la ligne IV-IV de la Figure 3.

- Les Figures 5 et 6 sont des vues schématiques, permettant de mieux expliciter le fonctionnement du dispositif en ce qui concerne en particulier le déplacement relatif des patins autobloquants vis-à-vis du poussoir du mécanisme de commande associé.

- La Figure 7 illustre une autre variante de réalisation des patins autobloquants et des poussoirs agissant sur ceux-ci.

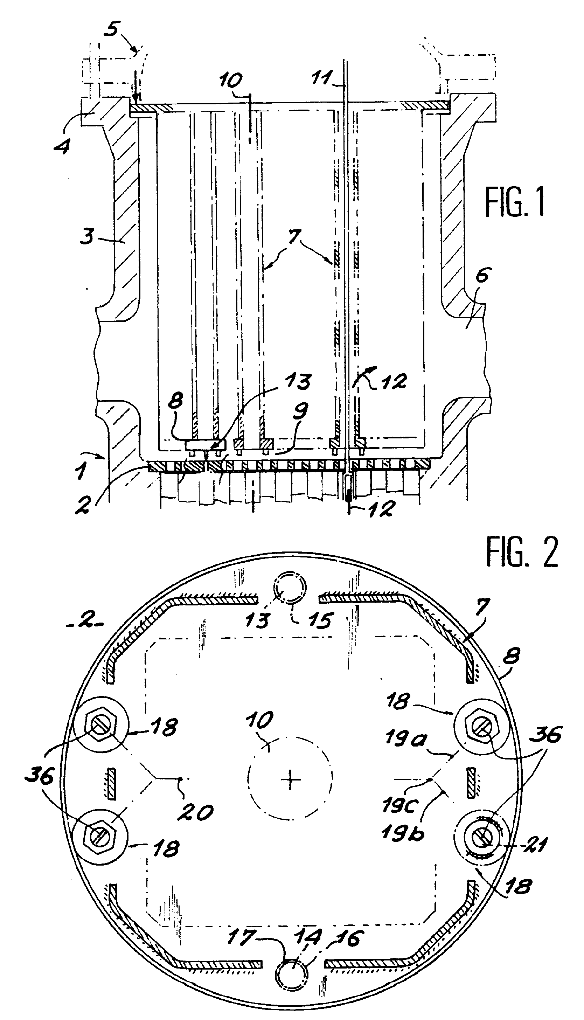

Sur la Figure 1, on a très schématiquement désigné sous la référence générale 1, la cuve d'un réacteur nucléaire à eau pressurisée, comportant au-dessus du coeur (non représenté), une plaque de fermeture, dite plaque supérieure de coeur 2, disposée horizontalement. La cuve 1 se prolonge au-dessus de la plaque 2 par une enceinte 3, terminée par une bride 4 sur laquelle vient se placer et se verrouiller un couvercle 5. Des ajutages de grand diamètre 6 sont prévus dans la paroi latérale de l'enceinte 3 pour l'entrée et la sortie de l'eau de refroidissement du coeur hors de la cuve.

Dans l'enceinte 3, est monté au-dessus de la plaque supérieure de coeur 2 un ensemble de guides 7, munis chacun à sa partie inférieure, d'une bride circulaire de guide 8 destinée à venir s'appliquer sur la plaque 2 tout en ménageant avec cette dernière un jeu vertical étroit 9. Les guides 7 s'étendent avec leur axe 10 vertical, perpendiculairement à la plaque 2 et sont réservés au montage de grappes de crayons absorbants (non représentés en détail) dont l'introduction plus ou moins accentuée à l'intérieur du coeur du réacteur au travers de la plaque 2 par l'intermédiaire d'un organe de manoeuvre 11, permet de contrôler la réaction nucléaire. Sur la Figure 1, la référence 12 schématise le sens de circulation de l'eau de refroidissement qui, s'écoulant du bas vers le haut, traverse la plaque supérieure 2 avant de s'évacuer hors des guides 7 puis de l'enceinte 3 par les ajutages 6 de celle-ci.

Dans une disposition du genre précédent, qui est en elle-même parfaitement classique dans la technique de construction de tels réacteurs, on conçoit que le positionnement précis des brides 8 des guides 7 des grappes absorbantes vis-à-vis de la plaque supérieure de coeur 2 soit particulièrement délicat et important, chaque guide devant notamment avoir son axe 10 positionné de façon parfaite en regard d'une ouverture correspondante dans la plaque 2 pour le passage des crayons absorbants. Simultanément, la dimension verticale du jeu 9 entre plaque et bride, doit être rigoureusement déterminée, ceci nonobstant les vibrations créées par l'écoulement de l'eau de refroidissement et les sollicitations hydrodynamiques qui s'exercent sur les moyens de liaison mis en oeuvre. Notamment, l'assemblage de la plaque de coeur 2 et des brides 8 qui la surmontent doit être réalisé de telle sorte que, en cas d'efforts excessifs, la liaison puisse tolérer les efforts qui en résultent, en ramenant ensuite les deux pièces dans leur position relative optimale, prédéterminée, ceci sans préjudice sur les structures mécaniques mises en oeuvre.

A cet effet et conformément à l'invention, chaque bride 8 d'un guide 7 quelconque est positionnée par rapport à la plaque de coeur 2 au moyen de deux broches pleines, respectivement 13 et 14, diamétralement opposées (Figure 2), ces broches étant implantées dans l'épaisseur de la bride en faisant saillie vers l'extérieur de celle-ci en direction de la plaque 2 et s'engageant dans des logements 15 et 16, prévus en regard dans la plaque 2 avec un jeu de montage convenable 17. Dans un mode de réalisation particulier de l'invention, les broches 13 et 14 émergent de la face inférieure de chaque bride 8 d'une hauteur suffisante pour obtenir un positionnement fin du guide 7 lié à cette bride vis-à-vis de la plaque de coeur 2, qui soit de l'ordre d'environ 0,5 mm. Ces broches 13 et 14 s'engagent dans leur logement 15 et 16 avec un jeu diamétral 17 qui est d'environ 0,3 à 0,4 mm en pratique.

Les deux broches de positionnement 13 et 14 sont associées, selon l'invention, à un ensemble de patins autobloquants 18 qui, dans l'exemple de réalisation plus spécialement considéré, sont au nombre de quatre et disposés comme l'illustre la Figure 2. Ces patins sont notamment conçus et réalisés de telle sorte que, ainsi qu'on le verra plus loin, ils puissent exercer sur la bride 8 des efforts convenablement répartis, en permettant, en combinaison avec le centrage obtenu par les broches 13 et 14, le positionnement rigoureux indispensable et la coïncidence parfaite et permanente des axes verticaux des passages réservés aux grappes absorbantes.

De préférence, les quatre patins autobloquants 18 sont ainsi répartis par paires, deux à deux de part et d'autre de plan diamétral reliant les broches 13 et 14, les patins d'une même paire exercent sur la bride 8 des efforts respectivement dirigés selon les flèches 19a et 19b, qui convergent en un point 19c situé sur l'axe transversal 20, perpendiculaire à la direction du plan joignant les broches 13 et 14. La conjonction des efforts des quatre patins 18 et des broches 13 et 14 permet alors de s'opposer au déplacement du guide de grappe par rapport à la plaque supérieure de coeur 2 sans les effets de trainée fluctuants et permanents assurant ainsi le centrage recherché de l'axe 10 du guide 7 lié à la bride 8, en coïncidence avec celui du passage (non représenté) prévu dans la plaque 2 sous la bride 8, à travers lequel la grappe de crayons absorbants sera en permanence plus ou moins introduite dans le coeur sous la plaque, pour le contrôle de la réaction nucléaire.

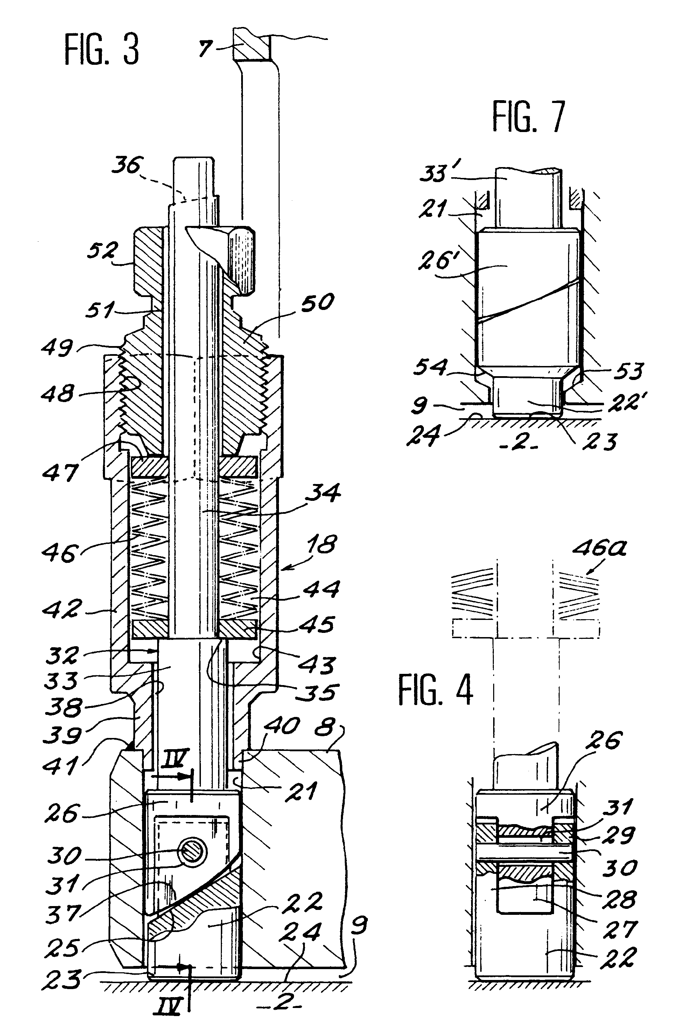

Les Figures 3 et 4 illustrent un mode de réalisation particulier d'un patin autobloquant 18 et du mécanisme de commande qui lui est associé.

Chaque ensemble comporte ainsi un bloc ou patin 22 proprement dit, monté avec jeu dans un alésage traversant 21 prévu dans la bride 8, ce patin 22 présentant une face inférieure plane 23 en contact avec la surface supérieure 24 de la plaque supérieure de coeur 2. Le patin 22 fait légèrement saillie sous la bride 8 d'une hauteur qui correspond au jeu 9 prévu entre la plaque 2 et la bride 8.

A son extrémité opposée à la face 23, le patin 22 présente une face inclinée 25, destinée à coopérer avec un poussoir 26, monté également avec jeu dans l'alésage 21.

Le patin 22 et le poussoir 26 sont réunis l'un à l'autre par une liaison non rigide, autorisant leur débattement axial relatif tout en permettant de suspendre le patin sous le poussoir, en le rendant ainsi imperdable. A cet effet, le poussoir est prolongé vers le bas par une nervure centrale plate 27, s'engageant entre les deux côtés parallèles 28 et 29 d'une chape (Figure 4), prévue à la partie supérieure correspondante du patin, la liaison entre la nervure 27 et les côtés 28 et 29 de la chape étant réalisée par une goupille transversale 30, passant à travers un trou cylindrique 31 de plus large diamètre ménagé dans la nervure 27.

Le poussoir 26 est prolongé vers le haut, en particulier vers la partie supérieure de l'alésage 21, par une tige plus étroite 32, débordant largement vers l'extérieur de cet alésage, la tige 32 comportant deux parties successives et coaxiales 33 et 34 de diamètres différents, la partie 33 ayant un diamètre plus grand que la partie 34, afin de ménager à la jonction de ces deux parties, un épaulement 35. A son extrémité supérieure, opposée à l'épaulement 35, la tige 32 comporte une fente 36, permettant de repérer l'orientation relative de la tige par rapport à la verticale et en particulier de faire varier la direction de l'effort exercé par le poussoir 26 sur le patin 22 par coopération des surfaces en appui mutuel de l'une et de l'autre. Dans ce but et pour permettre une orientation de la force résultante créée sur le patin 22, le poussoir 26 comporte à son extrémité inférieure, une face bombée 37, sensiblement en portion de cylindre et adaptée à venir en appui contre la surface inclinée 25 du patin, l'appui de ces surfaces l'une sur l'autre produisant une résultante des forces créées, en particulier pour les quatre patins associés d'une même broche, selon les directions 19a et 19b de la Figure 2.

La partie 33 de la tige 32 traverse avec jeu un passage axial 38, prévu dans un embout 39 dont l'extrémité inférieure 40 s'engage sur une faible hauteur dans l'alésage 21 de la bride 8, l'embout étant ensuite immobilisé par rapport à la bride par soudure en 41 ou par un autre moyen équivalent. L'embout 39 se prolonge vers le haut par un manchon 42, délimitant intérieurement une chambre ouverte 43, dans laquelle est monté également avec jeu, une cartouche à ressort 44, comportant une rondelle d'appui inférieure 45 traversée par la partie 34 de plus faible diamètre de la tige 32 et qui repose à la base de cette partie inférieure, sur l'épaulement 35. Un empilement de rondelles coniques 46 est disposé autour de la partie 34, ces rondelles étant ainsi contenues entre la bague inférieure 45 et une rondelle complémentaire 47. Un effort variable peut être exercé sur la cartouche à ressort 44 et par suite de la butée de la rondelle 45 sur l'épaulement 35, sur la tige 32 puis sur le poussoir 26. A cet effet, le manchon 42 présente dans sa surface interne un pas de vis 48, coopérant avec un filetage de même pas 49, prévu dans la surface externe d'une douille de tarage 50. Celle-ci comporte un alésage axial 51 traversé avec jeu par la partie 34 de la tige 32 et comprend à son extrémité supérieure un écrou de tête 52, permettant de commander la rotation de la douille dans le filetage du manchon, en exerçant sur la cartouche à ressort 44 l'effort souhaité, de l'ordre de 1000 N par patin.

Bien entendu, la structure particulière de la cartouche à ressort pourrait être différente de celle décrite ci-dessus, par exemple en utilisant, comme schématiquement illustré sur la Figure 4, des doubles rondelles 46a ou d'autres moyens permettant une transmission élastique de l'effort de la douille vers le poussoir, tout en assurant en cas d'effort en sens contraire l'absorption de ce dernier par simple compression de l'empilement des rondelles entre la rondelle 47 qui reste fixe et la rondelle 45 qui subit un mouvement télescopique dans le manchon 42 en suivant le déplacement limité correspondant de la tige 32.

Par construction, les patins 22 présentent un revêtement de surface approprié mais qui est de préférence différent en ce qui concerne la face inférieure plane 23 et la face supérieure inclinée 25 de ceux-ci. Notamment, le revêtement de surface de la face 23 est choisi de telle sorte qu'il confère un coefficient du frottement aussi élevé que possible sur la surface 24 de la plaque supérieure 2. En revanche, le revêtement de la face 25, de même que celui du poussoir 26 dans sa face bombée 37, est choisi avec un coefficient le plus faible possible pour faciliter leur glissement l'une sur l'autre. De préférence également, les surfaces externes du patin 22 et du poussoir 26, ainsi que de la surface interne de l'alésage 21, comportent un revêtement de surface analogue à celui des faces 25 et 37, pour faciliter de la même manière leurs glissements relatifs au cours de la mise en oeuvre du dispositif.

Le fonctionnement du dispositif de centrage et de fixation selon l'invention est le suivant : La bride 8 munie de ses deux broches fixes 13 et 14 (Figure 2) est mise en place sur la plaque supérieure 2 avec une tolérance dans leur positionnement qui correspond au jeu 17 de ces broches dans leurs logements 15 et 16 respectifs.

Le montage des broches et des patins autobloquants sur la bride des guides de grappe étant d'abord effectué, on procède ensuite au tarage des cartouches à ressort ; les guides de grappe sont alors montés sur la structure support au-dessus de la plaque supérieure de coeur.

Le montage des deux broches fixes 13 et 14 sur la bride 8 est effectué en premier lieu. Puis sur l'embout 39, on dispose le poussoir 32, la rondelle 45, la cartouche ressort 44, la rondelle 47, le manchon de tarage 50 (sans le serrer), le patin 22 sur le poussoir 32, son axe 30. Les quatre embouts ainsi équipés sont positionnés sur la bride 8 et fixés par soudage.

Sous la bride 8, est fixée une cale d'une épaisseur correspondante à l'espace 9 préétabli, puis on effectue le serrage à l'aide du manchon de tarage 50 de la cartouche à ressort 44 à une valeur prédéterminée prenant en compte la relaxation des éléments en service, des tolérances de tarage, de la variation du jeu 9, de telle sorte que l'effort exercé par le poussoir sur les patins reste toujours supérieur à une valeur calculée, soit environ 600 N. Le serrage du manchon de tarage est effectué par un des procédés habituels pour obtenir une précharge : soit au couple, soit avec une course angulaire après mise en contact, soit avec une cellule de force disposée sous le patin ou une combinaison de ces procédés.

On oriente les patins 22 et les poussoirs 26, 32 à l'aide des fentes 36 selon les directions 19a et 19b, puis on freine la rotation de l'écrou de tarage 52. On enlève alors la plaque de réglage ce qui a pour effet de relâcher la précharge des cartouches à ressort.

On monte ensuite les guides de grappe sur la structure de supportage qui positionne les brides 8 au-dessus de la plaque de coeur 2. Environ 20 mm avant l'obtention du jeu 9, les broches fixes, 13 et 14, s'engorgent dans les logements 15 et 16 respectifs avec un faible jeu 17, assurant ainsi une correcte orientation du guide de grappe sur la plaque supérieure de coeur 2, à environ 5 mm avant de parvenir au jeu 9, la face 23 des patins vient au contact de la plaque supérieure de coeur 2, les patins repoussent les poussoirs 26, 32 vers le haut, qui compriment les cartouches à ressorts à la valeur préétablie au montage.

Les quatre patins 18 sont commandés de telle sorte que la résultante des efforts qui s'exercent sur ces patins pris deux à deux, comme également illustré sur la Figure 2, convergent en des points symétriques l'un de l'autre dans un plan diamétral médian, perpendiculaire à celui qui joint les broches 13 et 14. Dans ce but, les patins 22, dont les faces planes inférieures 23 sont en contact avec la surface 24 de la plaque 2, sont soumis par les douilles de tarage 50 à un effort approprié en direction de la plaque, les tiges 32 étant préalablement orientées par leur fente 36 dans la direction souhaitée. Le vissage des douilles 50 se poursuit jusqu'à ce que, en raison du déplacement latéral des patins 22 créé par la coopération de la face bombée 37 du poussoir 26 avec la face inclinée 25 du patin correspondant, le jeu diamétral initialement défini entre le patin et son alésage soit ajusté, les rondelles élastiques 46 de la cartouche 44 étant comprimées dans la limite correspondante.

Dans cette position, la bride 8 est parfaitement positionnée par rapport à la plaque supérieure de coeur 2, en laissant seulement subsister entre ces pièces le jeu 9 nécessaire à la dilatation différentielle de la bride 8 et des structures qui lui sont liées.

Le tarage de la cartouche à ressort 44 prend notamment en compte la relaxation des éléments en service et les tolérances de tarage, de sorte que l'effort exercé par le poussoir sur les patins autobloquants reste sensiblement égal à lui-même, même quand le jeu 9 varie au cours des cycles thermiques résultant du fonctionnement du réacteur et des dilatations différentielles qui en résultent. Cet effort axial, multiplié par le coefficient de frottement entre les patins 22 et la plaque supérieure de coeur 2 crée ainsi une composante latérale qui s'oppose au déplacement transversal de la bride 8 sous l'effet des sollicitations hydrodynamiques dont ces pièces sont le siège, en particulier du fait de l'écoulement de l'eau de refroidissement à travers elles.

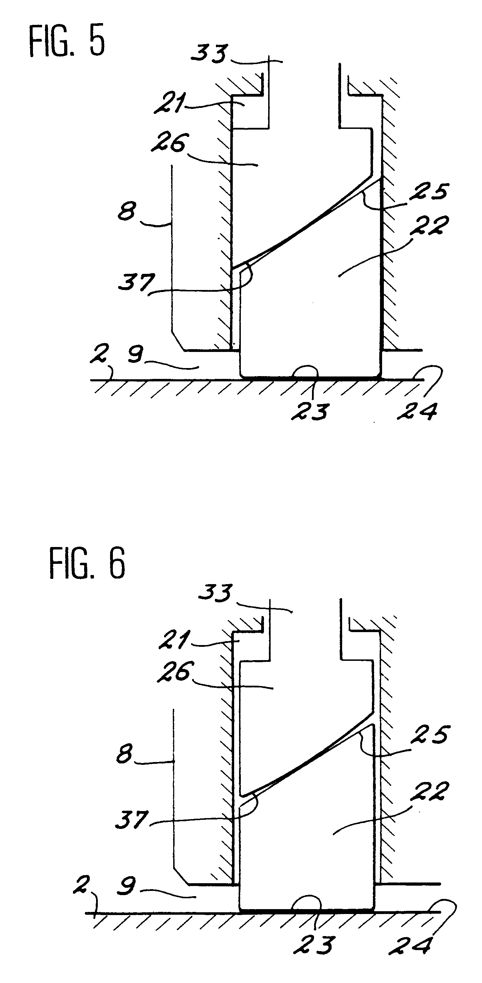

Les positions respectives du patin et du poussoir passent de celles de la Figure 6 à celles de la Figure 5, en raison de l'inclinaison des faces d'appui 25 et 37, ce qui a pour effet d'annuler le jeu du patin 22 et son logement dans la bride 8.

Bien entendu et comme il résulte déjà de ce qui précède, il va de soi que l'invention ne se limite pas exclusivement à l'exemple de réalisation plus spécialement décrit et représenté ci-dessus ; elle en embrasse au contraire toutes les variantes dans le cadre des revendications. En particulier et comme le montre notamment la Figure 7, on pourrait prévoir de substituer au montage en deux parties du patin 22 et du poussoir 26 réunis par leur goupille transversale 30, une autre réalisation schématisée sur la Figure 7 où l'extrémité inférieure de la partie 33′ de la tige comporte à nouveau un poussoir 26′ agissant sur le patin 22′ d'appui sur la surface 24 de la plaque 2, mais dans laquelle le patin est rendu imperdable grâce à une portée en retrait 53 prévue dans le fond de la bride et contre laquelle repose, notamment en position de transport de la bride, une collerette de même profil 54 dudit patin.

## Revendications

1. Dispositif pour le centrage et la fixation d'une bride de guide de grappe et d'une plaque de coeur d'un réacteur nucléaire, s'étendant parallèlement l'une à l'autre dans des plans horizontaux avec un écartement déterminé, comprenant au moins deux broches de guidage axial (13-14) de la bride (8) par rapport à la plaque de coeur (2), diamétralement opposées et solidaires de la plaque ou de la bride pour s'engager dans un logement en regard (15-16) prévu dans la bride ou dans la plaque respectivement, caractérisé en ce qu'il comporte un ensemble de patins autobloquants (18), adaptés à coulisser avec jeu dans des alésages (21) prévus dans la bride pour s'appliquer contre la surface de la plaque, ces patins (18) étant associés chacun à un mécanisme de commande en position, porté par la bride et exerçant sur les patins un effort ayant une composante transversale afin de réaliser par réaction l'immobilisation de la bride vis-à-vis de la plaque.

2. Dispositif selon la revendication 1, caractérisé en ce que la composante transversale exercée par le mécanisme de commande est déterminée afin de s'opposer à tout déplacement latéral de la bride par rapport à la plaque et à annuler le jeu latéral entre patin et bride.

3. Dispositif selon l'une des revendications 1 et 2, caractérisé en ce que les patins autobloquants (18) présentent une forme générale cylindrique (22) et comportent une face d'appui plane (23), appliquée contre la plaque de coeur (2) et une face opposée (25) inclinée sur l'horizontale.

4. Dispositif selon la revendication 3, caractérisé en ce que le mécanisme de commande coopérant avec chaque patin (18-22) est constitué au moyen d'un poussoir (26), engagé dans l'alésage (21) du patin et comportant une face bombée (37), en appui sur la face inclinée (25) du patin, ce poussoir étant prolongé à l'extérieur de l'alésage de la bride à l'opposé de la plaque par une tige allongée (32), disposée selon l'axe d'un manchon (42) fileté intérieurement à son extrémité (48) pour le vissage d'une douille de tarage creuse (50), traversée librement par la tige et exerçant un effort vertical sur celle-ci par l'intermédiaire d'une cartouche à ressort (44), en appui d'une part contre la douille et d'autre part sur une bague (45) traversée par la tige et en butée sur un épaulement (35) de celle-ci.

5. Dispositif selon la revendication 4, caractérisé en ce que la cartouche à ressort (44) comporte un empilement de rondelles coniques (46) montées entre la rondelle (45) en appui sur l'épaulement (35) de la tige (32) et une rondelle complémentaire (47) coulissant librement dans le manchon (42), parallèlement à l'axe de la tige, sous l'effet du vissage de la douille (50) sur le filetage interne (48) du manchon

6. Dispositif selon l'une des revendications 4 ou 5, caractérisé en ce que le manchon (42) comporte, à son extrémité inférieure, un embout creux (39), traversé par la tige (32) et dont l'extrémité s'engage en partie dans l'alésage (21) de la bride (8) puis est immobilisé en position par rapport à la bride par soudage ou autre moyen de fixation analogue.

7. Dispositif selon l'une quelconque des revendications 4 à 6, caractérisé en ce que la tige allongée (32) présente à son extrémité supérieure dépassant de la douille de tarage (50) une fente transversale (36) de repérage de son orientation axiale et par suite de celle de la face bombée (37) du poussoir (26) vis-à-vis de l'axe de la bride (8) en permettant, par réaction sur la face inclinée (25) du patin (18-22), un ajustement relatif du poussoir et par suite de la bride qui lui est liée, vis-à-vis de la plaque de coeur (2).

8. Dispositif selon l'une quelconque des revendications 1 à 7, caractérisé en ce que chaque patin (22) est configuré en forme de chape, dont les deux côtés parallèles (28-29) sont disposés de part et d'autre d'une nervure plane centrale (27), prolongeant le poussoir (26) vers le bas, la chape et la nervure étant réunies par une goupille transversale (30) portée par les côtés de la chape et engagée avec jeu dans un trou (31) de la nervure, afin de permettre un débattement axial et radial du poussoir par rapport au patin lors d'un blocage de la bride (8) vis-à-vis de la plaque (2).

9. Dispositif selon l'une quelconque des revendications 1 à 7, caractérisé en ce que chaque patin (18-22) comporte une collerette (54) en retrait, coopérant avec une portée de même profil (53) prévue dans le fond de l'alésage (21) de la bride (8).

10. Dispositif selon l'une quelconque des revendications 1 à 7, caractérisé en ce que chaque patin (18-22) comporte un premier revêtement de surface tel que la face (23) de ce patin en contact avec la plaque de coeur (2) présente un coefficient de frottement élevé.

11. Dispositif selon l'une quelconque des revendications 1 à 8, caractérisé en ce que le poussoir (26), la surface interne de l'alésage (21) de la bride (8) recevant le patin (18-22), ainsi que les faces inclinée (25) et bombée (37) respectivement du patin et du poussoir comportent un second revêtement de surface présentant un coefficient de frottement réduit.

12. Dispositif selon la revendication 11, caractérisé en ce que les revêtements sont constitués par de la "Stellite" pour le premier, du chrome pour le second.

**Patentansprüche**

1. Zentrier- und Befestigungsvorrichtung eines Steuerelementführungsrohrflansches und einer oberen Gitterplatte eines Kernreaktors, die sich in horizontalen Ebenen mit einem vorbestimmten Abstand zueinander erstrecken mit mindestens zwei axialen Führungszapfen (13, 14) des Flansches (8) bezüglich der Gitterplatte (2), die sich diametral gegenüberliegen und an der Gitterplatte bzw. an dem Flansch befestigt sind, um in ein gegenüberliegendes Lager (15, 16) einzugreifen, das in dem Flansch bzw. in der Gitterplatte vorgesehen ist,

**gekennzeichnet durch**

eine Gruppe selbstblockierender Kufen (18), die mit Spiel in Öffnungen (21), die in dem Flansch vorgesehen sind, um sich gegen die Oberfläche der Gitterplatte anzulegen, gleiten können, wobei diese Kufen (18) jeweils mit einem Mechanismus verbunden sind, zur Steuerung ihrer Lage, der von dem Flansch getragen wird und auf die Kufen eine Kraft ausübt mit einer transversalen Komponente, um als Reaktion die Befestigung des Flansches gegenüber der Gitterplatte zu bewirken.

2. Vorrichtung nach Anspruch 1,
dadurch gekennzeichnet,
daß die von dem Steuermechanismus ausgeübte transversale Kraftkomponente so bestimmt ist, daß sie sich gegen jede seitliche Bewegung des Flansches gegenüber der Gitterplatte stellt und das seitliche Spiel zwischen der Kufe und dem Flansch auf Null reduziert.

3. Vorrichtung nach einem der Ansprüche 1 und 2,
dadurch gekennzeichnet,
daß die selbstblockierenden Kufen (18) eine im allgemeinen zylinderförmige Form (22) haben und eine ebene Auflagefläche (23) besitzen, die auf der Gitterplatte des Kerns (2) aufliegt und eine gegenüberliegende Seite (25), die gegenüber der Horizontalen geneigt ist.

4. Vorrichtung nach Anspruch 3,
dadurch gekennzeichnet,
daß der Steuermechanismus, der mit jeder Kufe (18-22) zusammenwirkt, aus einem Schieber (26) besteht, der in die Öffnung (21) der Kufe eingreift und eine gewölbte Fläche (37) aufweist, die auf der geneigten Fläche (25) der Kufe aufliegt, wobei der Schieber zum Äußeren der Öffnung des Flansches in entgegengesetzter Richtung zu der Gitterplatte durch eine Verlängerungsstange (32) verlängert ist, die entlang der Achse einer Muffe (42), die im Inneren an ihrem Ende mit einem Gewinde (46) zum Einschrauben eines hohlen Tarierbolzens (50) verlängert ist, wobei die Muffe frei beweglich die Stange durchquert, auf die über eine Federbüchse (44) eine vertikale Kraft ausgeübt wird, wobei die Federbüchse einerseits gegen die Muffe anliegt und andererseits auf einem Ring (45), der von der Stange durchquert wird und auf einer .Schulter (35) der Stange aufliegt.

5. Vorrichtung nach Anspruch 4,
dadurch gekennzeichnet,
daß die Federbüchse (44) einen Stapel konischer Scheiben (46) aufweist, die angeordnet sind zwischen dem Ring (45), der gegen die Schulter (35) der Stange (32) anliegt und dem komplementären Ring (47), der frei in der Muffe (42) parallel zur Achse der Stange unter Einwirkung der Verschraubung des Bolzens (50) auf dem Innengewinde (48) der Muffe gleitet.

6. Vorrichtung nach Anspruch 4 oder 5,
dadurch gekennzeichnet,
daß die Muffe (42) an ihrem unteren Ende einen hohlen Ansatz (39) aufweist, der von der Stange (32) durchquert wird und dessen Ende in eine Öffnung (21) des Flansches (8) eingreift und dort schließlich bezüglich des Flansches durch Verschweißung oder andere analoge Befestigungsarten an diesem befestigt ist.

7. Vorrichtung nach einem der Ansprüche 4 bis 6,
dadurch gekennzeichnet,
daß die verlängerte Stange (32) an ihrem oberen Ende, das den Tarierbolzen (50) überschreitet, einen Querschlitz (36) zur Erkennung ihrer axialen Orientierung aufweist und aufgrunddessen auch zur axialen Orientierung der gewölbten Fläche (37) des Schiebers (26) gegenüber der Achse des Flansches (8), wodurch in Reaktion auf die geneigte Fläche (25) der Kufe (18-22) eine relative Justierung des Schiebers und aufgrunddessen des Flansches, der mit diesem verbunden ist, gegenüber der Gitterplatte (2) des Kerns ermöglicht wird.

8. Vorrichtung nach einem der Ansprüche 1 bis 7,
dadurch gekennzeichnet,
daß jede Kufe (22) in Form eines Bügels ausgebildet ist, dessen beide parallelen Seiten (28, 29) zu beiden Seiten einer ebenen zentralen Rippe (27) angeordnet sind, die den Schieber (26) nach unten verlängert, wobei der Bügel und die rippe miteinander über einen Quersplint (30) verbunden sind, der von den beiden Seiten des Bügels getragen wird und mit Spiel in ein Loch (31) in der Rippe eingreift, um ein axiales und radiales Verschieben des Schiebers gegenüber der Kufe während einer Blockade des Flansches (8) gegenüber der Gitterplatte (2) zu ermöglichen.

9. Vorrichtung nach einem der Ansprüche 1 bis 7
dadurch gekennzeichnet,
daß jede Kufe (18-22) einen rückgezogenen Kragen (54) aufweist, der mit einem Sitz mit dem gleichen Profil (53) zusammenwirkt, der im Boden der Öffnung (21) des Flansches (8) vorgesehen ist.

10. Vorrichtung nach einem der Ansprüche 1 bis 7, dadurch gekennzeichnet, daß die Kufe (18-22) eine erste Oberflächenbeschichtung aufweist, derart, daß die Fläche (23) der Kufe, die in Kontakt mit der Gitterplatte des Kerns (2) ist, einen hohen Reibungskoeffizienten hat.

11. Vorrichtung nach einem der Ansprüche 1 bis 8, dadurch gekennzeichnet, daß der Schieber (26), die innere Fläche der Öffnung (21) des Flansches (8), die die Kufe (18-22) aufnimmt, sowie die geneigten (25) und gewölbten (37) Flächen der Kufe und des Schiebers eine zweite Oberflächenbeschichtung aufweisen, die einen reduzierten Reibungskoeffizienten aufweisen.

12. Vorrichtung nach Anspruch 11, dadurch gekennzeichnet, daß die Beschichtungen aus "Stellite" für die erste Beschichtung und aus Chrom für die zweite Beschichtung bestehen.

**Claims**

1. Device for centering and fixing a collar for guiding a bundle and a core plate of a nuclear reactor, extending parallel one to the other in horizontal planes with a predetermined spacing, comprising at least two spindles (13-14) for the axial guidance of the collar (8) with respect to the core plate (2), which spindles are diametrically opposed and integral with the plate or the collar in order to engage in a housing (15, 16) in facing relationship, provided in the collar or in the plate respectively, characterised in that it comprises an arrangement of self-locking shoes (18), adapted to slide with clearance in bores (21) provided in the collar in order to press against the surface of the plate, these shoes (18) each being associated with a position-control mechanism, supported by the collar and exerting on the shoes a force having a transverse component in order to produce by reaction the immobilisation of the collar opposite the plate.

2. Device according to Claim 1, characterised in that the transverse component exerted by the control mechanism is determined in order to oppose any lateral displacement of the collar with respect to the plate and to cancel out lateral play between the shoe and collar.

3. Device according to one of Claims 1 and 2, characterised in that the self-locking shoes (18) have a general cylindrical shape (22) and comprise a flat support face (23), pressed against the core plate (2) and an opposing face (25) inclined with respect to the horizontal.

4. Device according to Claim 3, characterised in that the control mechanism cooperating with each shoe (18-22) is constituted by means of a pusher (26), engaged in the bore (21) of the shoe and comprising a curved face (37), bearing against the inclined face (25) of the shoe, this pusher being extended outside the bore of the collar opposite the plate by an elongated rod (32), disposed along the axis of a sleeve (42) having an internal screw thread at its end (48) for the screwing of a hollow calibrating bush (50), through which the rod passes freely and exerting a vertical force on the latter through the intermediary of a spring cartridge (44), bearing at one end against the bush and at the other end on a ring (45) through which the rod passes and which is in abutment with a shoulder (35) of the latter.

5. Device according to Claim 4, characterised in that the spring cartridge (44) comprises a stack of conical washers (46) mounted between the washer (45) bearing on the shoulder (35) of the rod (32) and a complementary washer (47) sliding freely in the sleeve (42), parallel with the axis of the rod, under the effect of the screwing of the bush (50) on the internal thread (48) of the sleeve.

6. Device according to one of Claims 4 or 5, characterised in that the sleeve (42) comprises, at its lower end, a hollow mouth-piece (39), through which the rod (32) passes and whereof the end engages partly in the bore (21) of the collar (8), then is immobilised in position with respect to the collar by welding or other similar fixing means.

7. Device according to one of Claims 4 to 6, characterised in that the elongated rod (32) comprises at its upper end projecting from the calibration bush (50) a transverse slot (36) for indicating its axial orientation and consequently that of the curved face (37) of the pusher (26) with respect to the axis of the collar (8) thus allowing, by reaction on the inclined face (25) of the shoe (18-22), a relative adjustment of the pusher and consequently of the collar which is connected thereto, with respect to the core plate (2).

8. Device according to one of Claims 1 to 7, characterised in that each shoe (22) is shaped as a clevis, whereof the two parallel sides (28-29) are disposed on either side of a central flat rib (27), extending the pusher (26) downwards, the clevis and the rib being connected by a transverse cotter-pin (30) supported by the sides of the clevis and engaged with play in a hole (31) in the rib, in order to allow an axial and radial movement of the pusher with respect to the shoe at the time of locking of the collar (8) with respect to the plate (2),

9. Device according to one of Claims 1 to 7, characterised in that each shoe (18-22) comprises a rim (54) which is set back, cooperating with a bearing of the same shape (53) provided in the base of the bore (21) of the collar (8).

10. Device according to one of Claims 1 to 7, characterised in that the shoe (18-22) comprises a first surface covering such that the face (23) of this shoe in contact with the core plate (2) has a high coefficient of friction.

11. Device according to one of Claims 1 to 8, characterised in that the pusher (26), the inner surface of the bore (21) of the collar (8) receiving the shoe (18-22) as well as the inclined face (25) and curved face (37) respectively of the shoe and of the pusher comprise a second surface covering having a reduced coefficient of friction.

12. Device according to Claim 11, characterised in that the coverings are constituted by "Stellite" for the first, chromium for the second.

FIG.1

FIG. 2

# FIG. 3

# FIG. 7

# FIG. 4

FIG. 5

FIG. 6